(19) Europäisches Patentamt

European Patent Office

Office européen des brevets

(11) **EP 0 863 845 B1**

(12) **EUROPEAN PATENT SPECIFICATION**

(45) Date of publication and mention
of the grant of the patent:
**26.04.2000 Bulletin 2000/17**

(51) Int Cl.[7]: **C01F 11/04**, C04B 2/10,
B01J 20/04

(21) Application number: **96940129.8**

(22) Date of filing: **26.11.1996**

(86) International application number:
**PCT/IT96/00228**

(87) International publication number:
**WO 97/19894 (05.06.1997 Gazette 1997/24)**

(54) **PROCESS FOR PRODUCING CALCIUM OXIDE, STRONTIUM OXIDE AND BARIUM OXIDE SHOWING A HIGH VALUE OF WATER SORPTION SPEED.**

VERFAHREN ZUR HERSTELLUNG VON CALCIUMOXID, STRONTIUMOXID UND BARIUMOXID MIT HOHER WASSERSORPTION-GESCHWINDIGKEIT.

PROCEDE DE PRODUCTION D'OXYDES DE CALCIUM, DE STRONTIUM OU DE BARYUM PRESENTANT UNE VALEUR ELEVEE DE SORPTION D'EAU.

(84) Designated Contracting States:
**DE FR GB NL**

(30) Priority: **27.11.1995 IT MI952471**

(43) Date of publication of application:
**16.09.1998 Bulletin 1998/38**

(73) Proprietor: **SAES GETTERS S.p.A.**
**20020 Lainate (Milano) (IT)**

(72) Inventor: **BOFFITO, Claudio**
**I-20017 Rho (IT)**

(74) Representative: **Adorno, Silvano et al**
**c/o SOCIETA' ITALIANA BREVETTI S.p.A.**
**Via Carducci, 8**
**20123 Milano (IT)**

(56) References cited:
**EP-A- 0 623 555      DE-A- 2 725 384**
**DE-B- 1 112 003      DE-C- 269 239**
**US-A- 5 408 832**

• **PATENT ABSTRACTS OF JAPAN vol. 014, no. 100 (C-0693), 23 February 1990 & JP 01 308825 A (YOSHIZAWA SEKKAI KOGYO KK), 13 December 1989,**

**Description**

The present invention is directed to a process for the production of calcium oxide, strontium oxide and barium oxide showing a high value of water sorption speed as well as to the oxides thus produced.

The water sorbing materials are divided in two main groups, i.e. the physical absorbers and chemical absorbers.

The former are generally materials having a very high porosity and specific surface (surface by weight unity) which absorb the humidity by interaction with the water molecules through attractive forces of relatively weak intensity: generally the humidity physical absorption is reversible and water is released even by heating at temperatures which are not very high. For example zeolites and $\gamma$-alumina belong to this category.

On the contrary the chemical adsorbers fix humidity by reacting with the molecules of water: the intensity of the chemical bonds thus formed is much greater than in case of physical absorption and the water is released only at high temperatures, generally above $500°C$. Consequently the chemical adsorbers of humidity are preferred in all the applications where a non reversible sorption of water is required. This category comprises for example calcium chloride $CaCl_2$, magnesium perchlorate $Mg(ClO_4)_2$, calcium oxide $CaO$ and barium oxide $BaO$. Among the chemical sorbers of humidity, the use of oxides is very practical as they are generally of easier availability and less expensive with respect to other materials. In the last years these humidity-sorbing oxides have been used alone or in combination with other materials sorptive for various gases, in order to create and maintain the vacuum within jackets used in the field of thermal insulation. Applications of this type are described e.g. in the patents US-A-4.444.821, US-A-5.091.233 or US-A-5.408.832, the last one being in the applicant's name. A characteristic which is required to the humidity sorbing materials for this application is that they show a relatively low value of water balance pressure, i.e. the pressure of water vapour remaining in the environment at their presence. This balance pressure varies according to the type of jacket, but preferably should be less than 1 Pa at room temperature.

Materials which meet this condition are the oxides of calcium; strontium and barium. Another characteristic which is required for the humidity sorbing materials, being generally important and particularly for the use in the thermally insulating jackets, is the sorption speed for water vapour. As a matter of fact, if the water sorption is kinetically too slow, the time required for reaching the balance pressure or anyhow a water pressure sufficiently low and suitable to the foreseen application, results to be too long and the materials unsuitable to the practical use. This problem is met with the calcium, strontium and barium oxides available in the trade.

JP-A-01308825 (Patent Abstracts of Japan, vol. 14 No. 100) describes the preparation of CaO with high hydration activity by dehydration of calcium hydroxide at temperatures in the range of $550-770°C$.

DE-B-1112003 discloses a similar heating process ($400-600°$ C, 1-2 h) of calcium hydroxide. A product sintering step at a higher temperature is accomplished in addition in order to realize sintering of the material in the shape and size as it is introduced in the furnace.

EP-A-623555 teaches the preparation and dehydration of a metal-substituted calcium hydroxides. Conversion of the hydroxides in the corresponding oxides is preferably accomplished at temperatures in the range $500-800°C$ during 0.5-5 h.

Object of the present invention is to provide a process for producing oxides of calcium, strontium and barium having a water sorption speed which is increased with respect to the commercial oxides.

This object is achieved according to the present invention with a process for the preparation of calcium oxide, strontium oxide or barium oxide, which consists in the treatment of the corresponding hydroxides according to the features recited in claim 1.

In the following a hydroxide or oxide of anyone of the three metals will be generally indicated with $M(OH)_2$ and MO respectively. Furthermore in the description and claims reference will be made to the hydroxides of simple formula $M(OH)_2$, but in their place it is also possible to use hydrated hydroxides, such as mono-hydrated barium hydroxide $Ba(OH)_2 \cdot H_2O$.

The invention will be illustrated in the following by making reference to the annexed drawings in which:

> FIGURE 1 represents a graph showing the comparison between the water sorption characteristics of two samples of CaO of the invention and of three samples of commercial CaO;
> FIGURE 2 represents a graph showing the comparison between the water sorption characteristics of a sample of BaO of the invention and of a sample of commercial BaO;
> FIGURE 3 shows the water sorption variation of a sample of CaO according to the invention being contained in a capsule having a porous surface portion; and

according to the invention being contained in a capsule having a porous surface portion; and

> FIGURE 4 shows an example of a capsule for containing the oxides of the invention.

The hydroxides $M(OH)_2$ can be suitably prepared from the corresponding commercial oxides through reaction with water; the hydroxides $M(OH)_2$ thus obtained are possibly dried to remove the excess water by treatment in air at temperatures between about 70 and $300°C$. These hydroxides can be also found as such in the trade.

The thermal treatment for converting hydroxide $M(OH)_2$ into the corresponding oxide can be made under vacuum, but preferably is carried out in a flow of inert gas, such as argon or nitrogen. In fact MO oxides formed through the reactions I-III are obtained in the form of extremely fine powder which could be drained away through the pumps used to keep the system under vacuum.

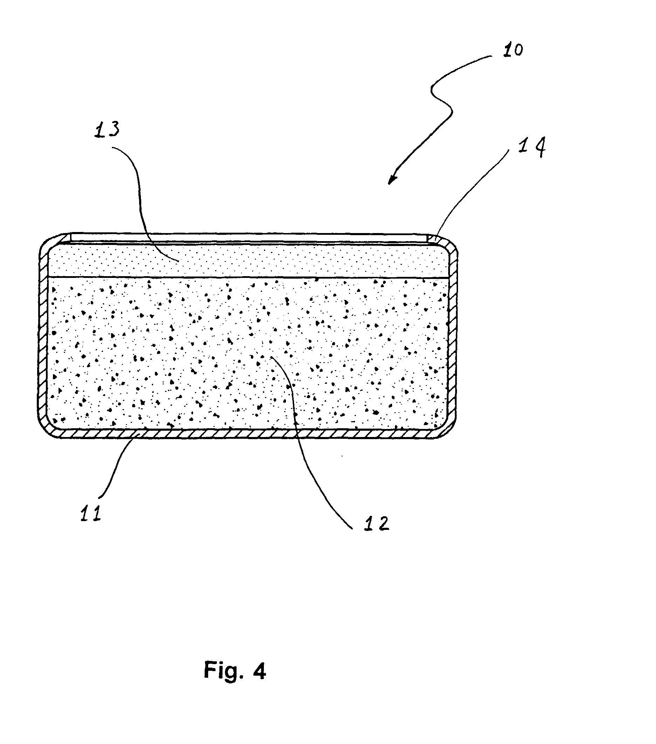

According to the invention, the oxides are not produced as loose powders, but within a capsule with at least a surface portion being permeable to the gas flow. In fact in many practical applications the humidity sorbing material cannot be fed to the working position in the form of loose powder. In this case it is possible to charge an oxide precursor in a container made of a material which could withstand without alteration the subsequent thermal treatments, having a surface portion permeable to the flow of water vapour but capable of stopping the powders. The preferred material for preparing the container is stainless steel which has a good thermal resistance and is easily formable by cold pressing. In addition there are available in the trade porous septa made of steel with controlled and variable porosity, particularly useful to produce the portion of container which is permeable to the water vapour. The closed container, permeable to water vapour and containing the oxide precursor is then subjected to the thermal treatments mentioned above to convert the precursor into oxide. In this case, as there is no danger that the system of vacuum pumps drains away the powder, it is preferred to carry out the thermal treatment of precursor decomposition under vacuum, what allows the use of lower temperatures. A capsule of this type is illustrated in Fig. 4, wherein a complete capsule 10 is shown, being formed of a container 11 at the inside of which an oxide 12 of the invention is placed, upperly closed by a porous septum 13. The upper edge 14 of container 11 is bent down onto the septum 13 so that to keep it in position.

The invention will be further illustrated by the following examples. These non-limiting examples show some embodiments having the purpose to teach those skilled in the art how to put into effect the invention and to represent the best mode considered for carrying out the invention.

EXAMPLE 1

In this example the preparation of calcium oxide according to the invention is described.

45 grams of commercial CaO, catalog number 24856-8 of Company Aldrich are placed in a beaker and treated with about 100 ml of deionized water, thus obtaining a precipitate of $Ca(OH)_2$.

The water in excess is removed by filtration and the solid residue is caused to dry in a stove at 100°C during some hours.

The dried hydroxide has a weight of 59.23 g, with a weight increase with respect to the starting oxide of 14.23 g, corresponding to a weight increase of 31.6% slightly lower than the increase of 32.1% as foreseen by the stechiometry of reaction:

$$CaO + H_2O \rightarrow Ca(OH)_2$$

The difference between the theoretical and experimental value of weight increase may be due to a slight degree of hydratation of the starting oxide.

15 g of $Ca(OH)_2$ thus produced are placed in a container of iron which is put within a sealed oven. Argon having a pureness of 99.99% is made to flow into the oven at a rate of 0.5 l by minute. At the same time there begins the heating from room temperature to 400°C, this temperature being reached in 45 minutes and then maintained for 15 hours. After this treatment the oven is put out and caused to cool naturally down to room temperature, while maintaining the argon flow. This process requires about 3 hours. At the end the argon flow is interrupted and the crucible containing CaO is withdrawn from the oven.

The obtained oxide has a weight of 11.36 g, with a decrease of 3.64 g with respect to the hydroxide, corresponding to the weight decrease of 24.3% as foreseen by the stechiometry of reaction:

$$CaOH_2 \rightarrow CaO + H_2O.$$

Calcium oxide is obtained in the form of an extremely brittle porous mass which easily loses powders. This mass is shivered in a mortar and then sieved, thus obtaining a powder with a particle size of less than 127 μm.

EXAMPLE 2

The preparation of example 1 is repeated, but decomposing instead under vacuum $Ca(OH)_2$ upon drying in an oven at 500°C.

EXAMPLE 3

In this example the humidity sorption characteristics are illustrated for a sample of CaO prepared as described in example 1.

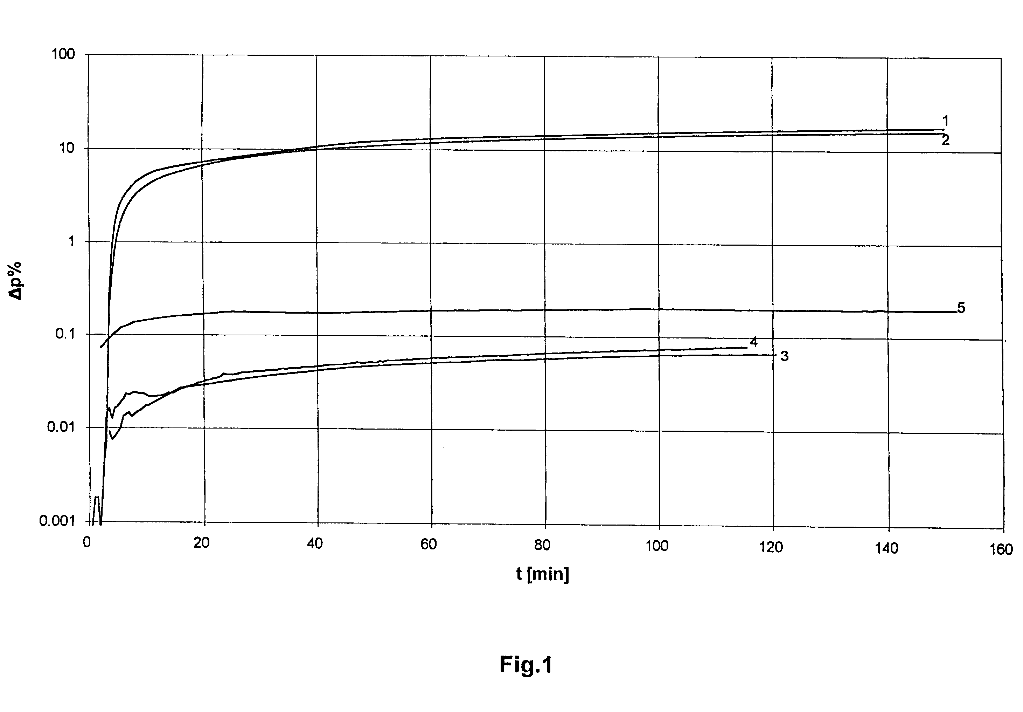

100 mg of CaO, prepared according to example 1 are placed in a microbalance CAHN Mod. 121. The measuring chamber of the microbalance is evacuated. Water vapour is introduced into the chamber by means of a fine adjustment valve in communication with a water tank, whereby a known pressure is determined in the system, at a value kept constantly at 133.33 Pa during the whole test and the weight variation of the sample is measured. The test result is plotted on the graph of figure 1 as curve 1. In the figure there is indicated in logarithmic scale the percent weight increase ($\Delta p\%$) of CaO due to water sorption in function of the time (t).

## EXAMPLE 4

The test of example 3 is repeated with 100 mg of CaO prepared as described in example 2. The result of the test is plotted in the graph of figure 1 as curve 2.

## EXAMPLE 5 (COMPARATIVE)

The test of example 3 is repeated with 100 mg of commercial CaO of the firm Aldrich as used in example 1, ground and sieved until obtaining a powder having a particle size of less than 127 μm. The test result is plotted in the graph of figure 1 as curve 3.

## EXAMPLE 6 (COMPARATIVE)

The test of example 3 is repeated with 100 mg of commercial CaO, catalog No. 21205 of the firm Fluka, ground and sieved until obtaining a powder with a particle size of less than 127 μm. The test result is plotted in the graph of figure 1 as curve 4.

## EXAMPLE 7 (COMPARATIVE)

The test of example 3 is repeated with 100 mg of commercial CaO, catalog No. 623635 of the firm Johnson Matthey, ground and sieved until obtaining a powder with a particle size of less than 127 μm. The test result is plotted in the graph of figure 1 as curve 5.

## EXAMPLE 8

In this example a preparation of barium oxide according to the invention is described.

50 g of mono-hydrated barium hydroxide, $Ba(OH)_2 \cdot H_2O$, of minimum pureness 99%, supplied by the company S.A.B.E.D. S.p.A. of Vada (Italy), are ground and sieved to a particle size of less than 127 μm. 15 g of the powder thus obtained are introduced in a container of iron that is placed within a sealed oven. A vacuum of 6.7 Pa is made in the oven. The heating starts from room temperature to 890°C, temperature that is reached in 6 hours and then maintained for 1.5 hours. After this treatment the oven is put out and the natural cooling under vacuum is let take place until room temperature, what requires about 5 hours. At the end air is introduced in the oven until atmospheric pressure and the crucible containing BaO is withdrawn from the oven.

The oxide obtained has a weight of 12.08 g, with a decrease of 2.92 g with respect to the mono-hydrated hydroxide, i.e. of 19.4%; the decrease foreseen by the stechiometry of the reaction:

$$Ba(OH)_2 \cdot H_2O \rightarrow BaO + 2H_2O$$

is of 19.0%; the difference between the theoretical and the experimental value of weight decrease is to be ascribed to the pureness degree of the starting mono-hydrated hydroxide.

Barium oxide is then crumbled and sieved, thus obtaining a powder of a particle size lower than 127 μm.

## EXAMPLE 9

By this example the humidity sorption characteristics of the BaO sample according to the invention are illustrated.

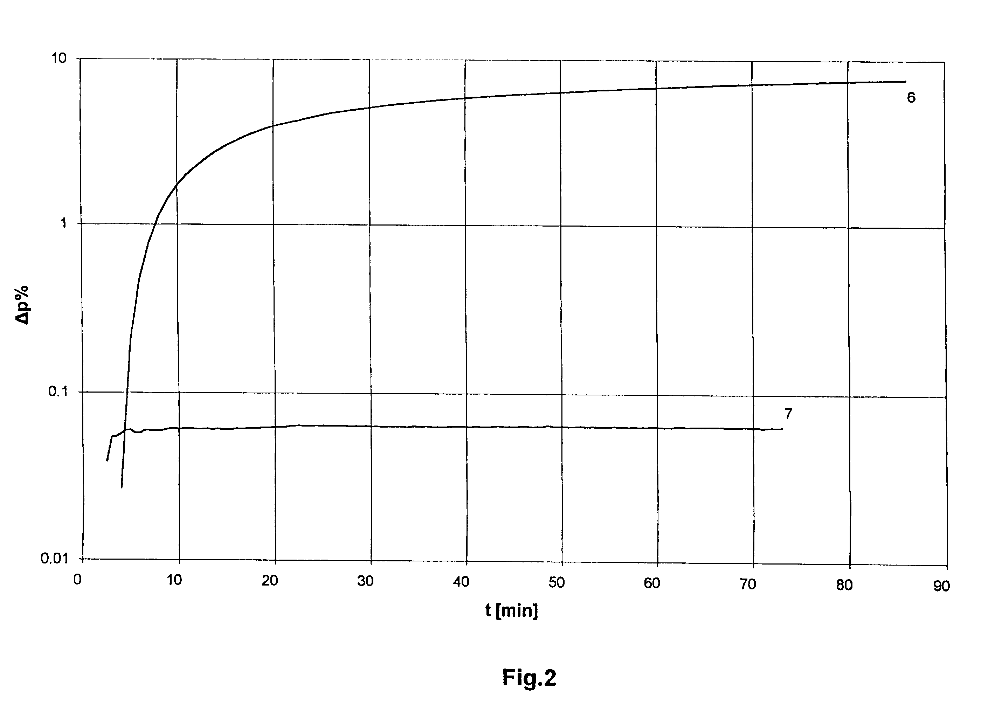

The test of example 3 is repeated with 100 mg of BaO prepared as described in example 8. The test result is plotted in the graph of figure 2 as curve 6.

## EXAMPLE 10 (COMPARATIVE)

The test of example 3 is repeated with 100 mg of commercial BaO of the firm Schiapparelli, ground and sieved until obtaining a powder having a particle size of less than 127 μm. The test result is plotted in the graph of figure 2 as curve 7.

## EXAMPLE 11

17 mg of $Ca(OH)_2$, prepared according to the procedure described in the first portion of example 1, are introduced in a cylindrical container of stainless steel having an inner diameter of 5 mm and height of 3 mm. The powder is slightly compressed and thereon a porous stainless steel disk is superimposed with a porosity equivalent to 30 μm. The upper edge of the capsule is then clinched on the edge of the porous disk, thereby a capsule as shown in figure 4 is formed. The capsule is then introduced in an evacuated oven and heated up to 400°C. This temperature is reached in about 30 minutes and is maintained during 20 minutes. Thereafter the oven is put out and the sample let cool down to room temperature. The capsule is then removed from the system and weighed by measuring a weight decrease of 4 mg, corresponding to the stechiometric value for the reaction:

$$CaO + H_2O \rightarrow Ca(OH)_2$$

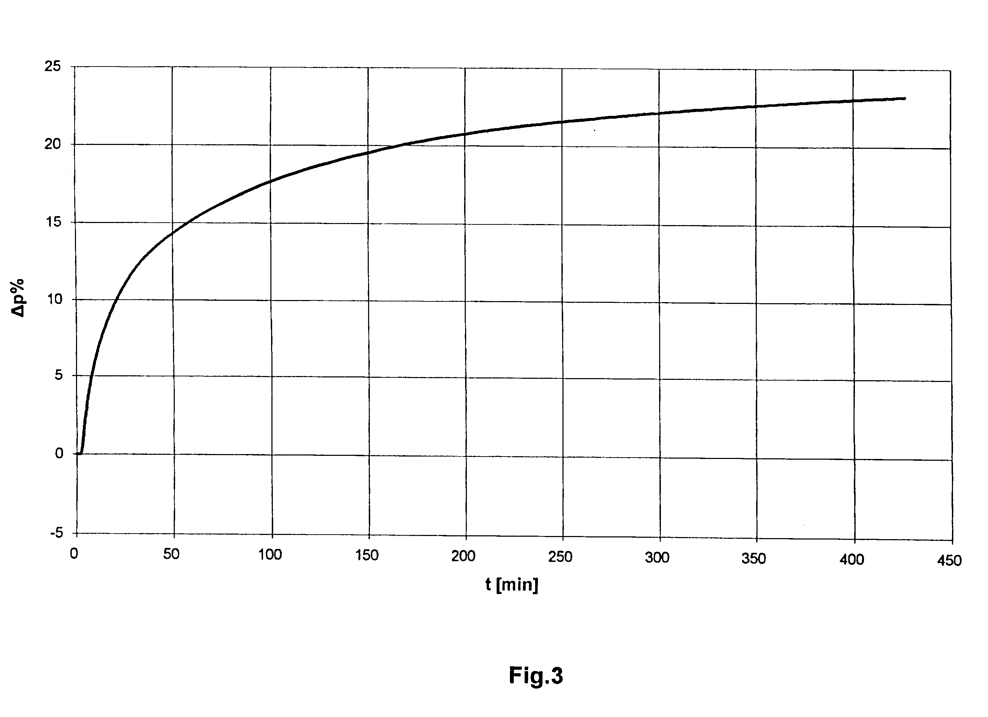

The capsule is then introduced in the measuring device described in example 3 and subjected to a water sorption test at a pressure of 133.33 Pa. The results of such a test are shown in figure 3 as curve 8.

By considering the results of the tests according to examples 3-7 it will be noted that the two samples of calcium oxide prepared following two different procedures of the invention (curves 1, 2 of figure 1) show humidity sorption characteristics which are much better than for the samples of commercial calcium oxide (curves 3-5 of figure 1). The curves of figure 1 show some irregularities at the initial portion, corresponding to the first minutes of the test; these irregularities are due to the starting oscillations of weighing operations, amplified by the logarithmic scale. If this beginning portion of the curves is neglected, it is seen that the two samples of the invention initially sorb humidity much more quickly than the commercial samples. Furthermore, after two hours of test, the samples of the invention show a weight increase of about 20%, i.e. about 60% of the theoretical weight increase that is 32%. At the same time the commercial samples show a weight increase corresponding to about 0.2%, 100 times lower than that of the inventive samples.

Similarly, upon examining figure 2 it is noted that the sample of BaO of the invention (curve 6) has humidity sorption characteristics much better than the commercial sample (curve 7); also in this case the water sorption speed of the inventive sample at the beginning is much higher than that of the commercial sample and again at about one hour and half from the test beginning the sample of the invention has sorbed a water quantity about 100 times greater than with the commercial oxide.

Finally, from the graph of figure 3 it is noted how a calcium oxide sample prepared according to the process of the invention maintains a high sorption speed for the water vapour even if contained within a capsule, i.e. a situation in which the accessibility of water vapour to the oxide is reduced.

In fact under these conditions the sample sorbs in three hours water for a weight greater than 20% of its initial weight, i.e. about two thirds of the stechiometric sorption.

Therefore the oxides obtained through the process of the invention show general features of water sorption superior than the commercial oxides, in particular with respect to the sorption speed. For this reason, upon their preparation, they require some cautions of treatment such as the preservation under vacuum or inert at atmosphere and their efficiency results in particular whenever superior sorption performances are required, such as in the applications directed to the thermal insulation initially describe.

## Claims

1. A process for the preparation of calcium oxide, strontium oxide or barium oxide, consisting in the treatment of the corresponding hydroxides following the reactions:

$$Ca\,(OH)_2 \rightarrow CaO + H_2O \qquad (I)$$

$$Sr(OH)_2 \rightarrow SrO + H_2O \qquad (II)$$

$$Ba(OH)_2 \rightarrow BaO + H_2O \qquad (III)$$

at temperatures comprised between 400 and 900°C during a time between 1 and 15 hours under vacuum or atmosphere of inert gas, wherein the reaction for converting the hydroxide into oxide is caused to take place in a capsule with at least a portion of surface permeable to the gas flow.

2. A process according to claim 1, characterized by comprising the following steps:

   - preparing a container made of a material resisting without alterations to temperatures of up to 900°C;
   - placing one of said hydroxides in the container;
   - closing the container by a porous septum made of a material resisting without alterations to temperatures of up to 900°C;
   - decomposing the hydroxide within the container by a treatment under vacuum or inert gas at temperatures comprised between 400 and 900°C.

## Patentansprüche

1. Ein Verfahren zur Herstellung von Calciumoxid, Strontiumoxid oder Bariumoxid, bestehend in der Behandlung der entsprechenden Hydroxide entsprechend den Reaktionen:

$$Ca(OH)_2 \rightarrow CaO + H_2O \qquad (I)$$

$$Sr(OH)_2 \rightarrow SrO + H_2O \qquad (II)$$

$$Ba(OH)_2 \rightarrow BaO + H_2O \qquad (III)$$

bei Temperaturen zwischen 400 und 900°C über einen Zeitraum zwischen 1 und 15 Stunden unter Vakuum oder in einer Inertgasatmosphäre, worin die Reaktion zur Umwandlung des Hydroxids in das Oxid veranlaßt wird, in einer Kapsel abzulaufen, deren Oberfläche wenigstens teilweise durchlässig für den Gasstrom ist.

2. Verfahren nach Anspruch 1, **dadurch gekennzeichnet,** daß es die folgenden Stufen umfaßt:

   - Herstellen eines Behälters aus einem gegenüber Temperaturen von bis zu 900°C ohne Veränderungen widerstandsfähigem Material;

- Einbringen von einem der genannten Hydroxide in den Behälter;

- Verschließen des Behälters durch ein poröses Septum aus einem gegenüber Temperaturen von bis zu 900°C ohne Änderungen widerstandsfähigem Material;

- Zersetzen des Hydroxids innerhalb des Behälters durch eine Behandlung unter Vakuum oder Inertgas bei einer Temperatur zwischen 400 und 900°C.

**Revendications**

1. Un procédé pour la préparation d'oxyde de calcium, d'oxyde de strontium ou d'oxyde de baryum, consistant dans le traitement des hydroxydes correspondants suivant les réactions :

$$Ca(OH)_2 \rightarrow CaO + H_2O \qquad (I)$$

$$Sr(OH)_2 \rightarrow SrO + H_2O \qquad (II)$$

$$Ba(OH)_2 \rightarrow BaO + H_2O \qquad (III)$$

à des températures comprises entre 400 et 900°C pendant un temps entre 1 et 15 heures sous vide ou sous une atmosphère de gaz inerte, dans lequel la réaction pour convertir l'hydroxyde en oxyde est amenée à avoir lieu dans une capsule avec au moins une partie de surface perméable à l'écoulement gazeux.

2. Un procédé selon la revendication 1, caractérisé en ce qu'il comprend les étapes suivantes :

- préparer un récipient réalisé en une matière résistant sans altérations à des températures allant jusqu'à 900°C ;

- placer un desdits hydroxydes dans le récipient ;

- fermer le récipient par une cloison poreuse réalisée en une matière résistant sans altérations à des températures allant jusqu'à 900°C ;

- décomposer l'hydroxyde à l'intérieur du récipient par un traitement sous vide ou sous gaz inerte à des températures comprises entre 400 et 900°C.

**Fig.1**

Fig.2

t [min]

Δp%

**Fig.3**

EP 0 863 845 B1

**Fig. 4**